# EUROPEAN PATENT SPECIFICATION

(11) **EP 4 242 817 B1**
(45) Date of publication and mention of the grant of the patent: **11.12.2024**
(21) Application number: 23168426.7
(22) Date of filing: 29.06.2017
(51) Int. Cl.: G06F 3/0488, G06F 3/01, G06F 3/0484, G06F 1/16

(54) **PORTABLE TERMINAL**
TRAGBARES ENDGERÄT
TERMINAL PORTABLE

(43) Date of publication of application: 13.09.2023
(62) Divisional of application: 17915923.1
(73) Proprietor: Maxell, Ltd., Kyoto (JP)
(72) Inventor: YOSHIZAWA, Kazuhiko, Kyoto, 618-8525 (JP); HASHIMOTO, Yasunobu, Kyoto, 618-8525 (JP); SHIMIZU, Hiroshi, Kyoto, 618-8525 (JP); OKAMOTO, Kaneyuki, Kyoto, 618-8525 (JP)
(74) Representative: Mewburn Ellis LLP

(56) References cited:
- EP-A2- 2 525 271
- EP-A2- 2 613 224
- US-A1- 2013 169 560

## Description

### TECHNICAL FIELD

The present invention relates to a portable terminal.

### BACKGROUND ART

Recent advances in communication represented by smartphones, information processing technology, camera imaging technology and semiconductor technology have been remarkable, and with the development and expansion of such environments, technology for performing operations more smoothly than operations in portable terminals of a related art has been developed.

For example, an advanced man-machine interface system in which a voice recognition function is installed in a smartphone, and a smartphone is operated by voice or the like has also been introduced. Further, a touch pad that enables an intuitive operation by an icon is generally installed in smartphones. The reason why the operation by the touch pad is common is that an operation is stable, and it can be manufactured with inexpensive parts.

However, even though operability is excellent, in the case of the operation by voice, it is likely to be affected by a surrounding noise or other people's voice, and in the case of the operation by the touch pad, it is likely that a hand slips so that another nearby icon is operated.

As a technique related to prevention of an erroneous operation, for example, a technique of setting a line of sight effective range for detecting whether or not it is within a line of sight range effective for an operation by detecting a user's line of sight, disabling an operation when a key is operated, and the user's line of sight is not within the effective range, and preventing an erroneous operation is disclosed in Patent Document 1.

US2013169560 discloses a method and system for assisting a user when interacting with a graphical user interface which combines gaze based input with gesture based user commands.

### CITATION LIST

### PATENT DOCUMENT

Patent Document 1: JP 2015-28734 A

### SUMMARY OF THE INVENTION

### PROBLEMS TO BE SOLVED BY THE INVENTION

The erroneous operation of the key can be prevented using the technique disclosed in Patent Document 1. However, such a technique is likely to impair the operability of smartphones and is difficult to apply to smartphones.

It is an object of the present invention to provide a technique of preventing an erroneous operation without impairing the operability in a portable terminal such as a smartphone.

### SOLUTIONS TO PROBLEMS

A representative portable terminal according to the present invention includes a touch pad that displays an icon and detects a touch, a camera that images a direction in which light of a display of the touch pad travels, a detecting unit that detects a point of view to which an eye of a face imaged by the camera is turned, an information management unit that outputs a position of the point of view detected by the detecting unit on the touch pad, a cursor display unit that performs control such that a cursor is displayed on the touch pad according to the position of the point of view on the touch pad output from the information management unit, an input condition management unit that determines whether or not a preset input condition is satisfied for an input by a touch to a preset special region of the touch pad and an input of the position of the point of view on the touch pad output from the information management unit, and an application program executing unit that activates an application program corresponding to the icon according to the determination of the input condition management unit.

### EFFECTS OF THE INVENTION

According to the present invention, it is to provide a technique of preventing an erroneous operation without impairing the operability in a portable terminal such as a smartphone.

### BRIEF DESCRIPTION OF THE DRAWINGS

Fig. 1 is a diagram illustrating an example of a smartphone and an operation thereof.
Fig. 2 is a diagram illustrating an example in which icons are displayed on a smartphone.
Fig. 3 is a diagram illustrating an example in which a text is displayed on a smartphone.
Fig. 4 is a diagram illustrating an example of a display of a tablet terminal.
Fig. 5A is a diagram illustrating an example in which a map is displayed on a tablet terminal.
Fig. 5B is a diagram illustrating an example in which a map is enlarged and displayed on a tablet terminal.
Fig. 5C is a diagram illustrating an example of displaying detailed information of a map on a tablet terminal.
Fig. 6A is a diagram illustrating an example in which a map is displayed on a tablet terminal.
Fig. 6B is a diagram illustrating an example of displaying detailed information of a map on a tablet terminal.
Fig. 7 is a diagram illustrating an example of calibration.
Fig. 8 is a diagram illustrating an example of distance measurement by two cameras.
Fig. 9 is a diagram illustrating examples of a glasses-type device and a portable terminal.
Fig. 10 is a diagram illustrating an example of an operation in which a camera is not used.
Fig. 11A is a diagram illustrating an example of a tablet terminal that detects touches of a plurality of fingers.
Fig. 11B is a diagram illustrating an example of a screen of a tablet terminal.
Fig. 12A is a diagram illustrating an example of a smartphone including a special region in a touch pad.
Fig. 12B is a diagram illustrating an example of an operation of a special region of a smartphone.
Fig. 13 is a diagram illustrating an example of a hardware configuration of a portable terminal.
Fig. 14 is a diagram illustrating an example of a hardware configuration of a portable terminal.
Fig. 15 is a diagram illustrating an example of a process of a portable terminal.

### MODE FOR CARRYING OUT THE INVENTION

Hereinafter, exemplary embodiment of the present invention will be described with reference to the appended drawings.

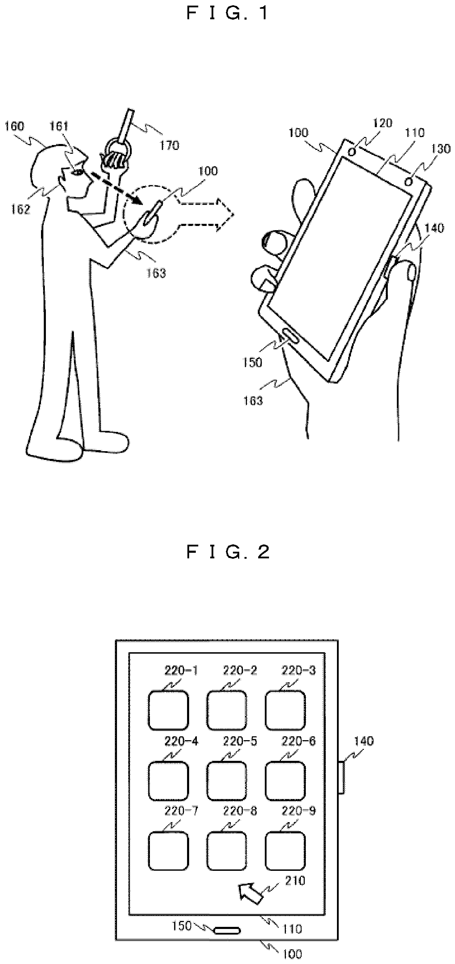

Fig. 1 is a diagram illustrating an example of a smartphone 100 and an operation thereof. In the example of Fig. 1, a user 160 who operates the smartphone 100 is holding the smartphone 100 with one hand 163 since one hand is holding onto a strap 170 in a transportation system such as a train or bus, and so one hand is occupied.

The user 160 looks at the smartphone 100 with eyes 161 with the face facing the smartphone 100 in order to operate the smartphone 100. The smartphone 100 includes a touch pad (display screen) 110, a camera 120, a camera 130, a side button 140, and a microphone 150, and the user 160 looks at the touch pad 110.

The camera 120 and the camera 130 image the face of the user 160, especially, eyes 161 of the user 160. Then, a distance between the face and the touch pad 110 is calculated by imaging with the two cameras, the line of sight is specified from a positional relation of the white of the eyes 161 and the apple of the eye, and a point of view in the touch pad 110 is obtained, but it will be further described later.

In the example of the smartphone 100 illustrated in Fig. 1, two cameras are disposed, but one camera may be disposed if the distance between the face and the touch pad 110 can be detected by another sensor. For example, instead of the camera 120 on the same surface as the touch pad 110, an infrared or ultrasonic distance sensor may be disposed at the position of the camera 120 to measure the distance from the face of the user 160.

Further, in a case in which it is difficult to identify the positional relation between the white of the eye of eyes 161 and the apple of the eye and specify the point of view, for example, since the user 160 is wearing sunglasses or the like, other inputs may be used instead of it. However, in order to determine whether or not the face of the user 160 is facing the touch pad 110, a contour of the face, for example, a contour 162 including hair and the ears may be identified.

Fig. 2 is a diagram illustrating an example in which icons 220 are displayed on a smartphone 100. The example in Fig. 2 is a display called a home screen or a standby screen, and the icons 220 are displayed on the touch pad 110. Further, in a case in which any one of icons 220-1 to 220-9 is not specified, these are represented by an icon 220, and hereinafter, the same applies to other reference numerals.

Each of the icons 220-1 to 220-9 is an icon which is set in association with an application program in advance, and the application program corresponding to the icon 220 selected among them is executed. A cursor 210 is displayed at the point of the view position of the user 160. That is, it indicates a cursor position at which the point of view is fed back to the user is illustrated.

First, the line of sight of the user 160 vaguely captures a point on touch pad 110. In a case in which there is an incoming call for the smartphone 100, an activation icon of an application program that automatically gives a response indicating that it is unable to transition to a reception state is an icon 220-8, the user 160 moves the line of sight to align the cursor 210 with the icon 220-8.

Then, the smartphone 100 specifies that there is the point of view on the icon 220-8, and activates the application program corresponding to the icon 220-8 if a switch-on operation of the side button 140 or a so-called "decision" operation is detected. Accordingly, it is possible to select and activate the application with a one-hand operation.

In Fig. 1, the user 160's action of holding onto the strap 170 is used as an example, but there are many cases in which the operation by only one hand is required such as a case in which the user is carrying luggage, holding materials with a hand, walking while holding a hand with a child, or has an injured one hand, and in these cases, the operation described above is effective.

Further, if it is specified that the point of view has moved to the icon 220-8, the smartphone 100 may perform a highlight display by changing a display color of the icon 220-8, a display size, or a display shape in addition to moving the cursor 210 onto the icon 220-8. Accordingly, the user 160 can confirm that the icon 220-8 is selected more reliably.

Also, if it is specified that the point of view has moved onto one of the icons 220 without displaying the cursor 210, the smartphone 100 may change the display color of the icon 220, the display size, or the display shape.

Further, in the example of Fig. 2, the shape of the cursor 210 is indicated by an arrow, but in order to emphasize a meaning indicating a part at which the line of sight stays, for example, a target mark in which a circle and a cross are combined may be used or the like.

In the above description, an example in which the application program is activated in the standby screen has been described, but the process of the operation described above can also be used for an operation while the application program is being executed. For example, the icon 220 illustrated in Fig. 2 may be a number key for inputting a telephone number, and a number may be input when the icon 220 is selected while an application program related to a telephone is being executed.

Also, for example, in a case in which an automatic answering function is used, it may be required to input a number according to a synthesized voice message. In other words, a state in which numbers can be input from the touch pad and a state in which a synthesized voice message output from the smartphone is heard may overlap.

On the other hand, in the smartphone 100, since the icon 220 which is the number key is selected by the point of view of the user 160 by the cameras 120 and 130, even when the ear touches the touch pad 110 to hear a message, the icon 220 which is the number key is not selected, and a situation in which an unintentional touch pad input is received does not occur.

Further, a situation in which an unintentional input caused by an unconscious touch to the touch pad 110 is received does not occur in the middle of an action of putting the smartphone 100 into a pocket in the standby screen or while the application program is being executed. This is because the selection of the icon 220 by the point of view is not performed, further, the switch-on operation of the side button 140 is not performed, and an intended condition of decision (execution) of the user is not satisfied.

As described above, even though one type of operation occurs by mistake as one instruction such as decision of an application program or the number key is input by a combination of two types of operations, it does not lead to an erroneous instruction.

The point here is that great effects such as erroneous input recognition prevention and usability improvement by only one-hand operation can be obtained by the relatively simple software process if the camera function that is a standard built-in function of a smartphone such as user face recognition and line of sight or point of view detection is provided.

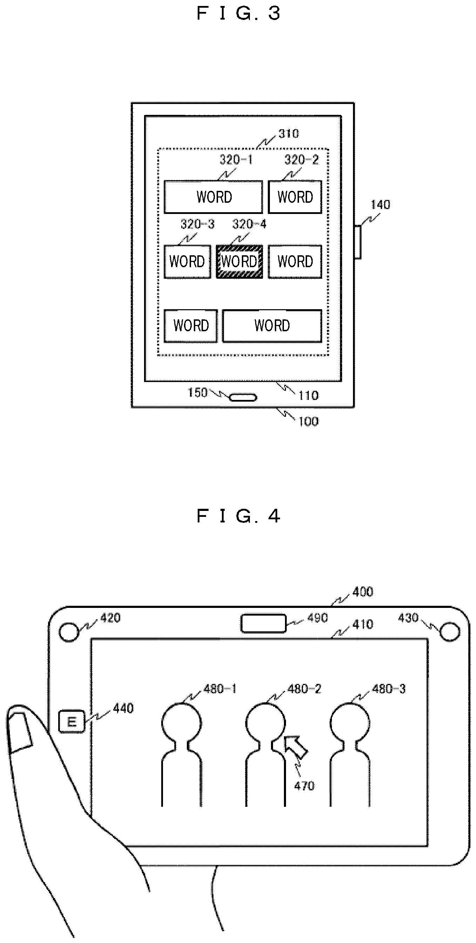

An example of executing other application programs in the smartphone 100 will be described. Fig. 3 is a diagram illustrating an example in which a text is displayed on a smartphone 100. The text includes a sequence of words, and for example, the user 160 read words 320 in the order of a word 320-1, a word 320-2, a word 320-3, and a word 320-4 while moving the point of view.

Here, in a case in which the user 160 desires to copy the word 320-4, the point of view of the user 160 is at the word 320-4, and the smartphone 100 identifies the point of view. Here, the microphone 150 receives an operation by voice as the side button 140 is switched on. The operation by voice is, for example, "copy."

On the other hand, the smartphone 100 copies the word 320-4 and pastes it on a clipboard. Also, the operation by voice may be another type of operation or may be an operation for text editing.

As described above, even though one type of operation occurs by mistake as two instructions such as selection and copy of the word 320-4 are input by a combination of three types of operations, it does not lead to an erroneous instruction.

Next, an example of a tablet terminal is described. Fig. 4 is a diagram illustrating an example of a display of a tablet terminal 400. The tablet terminal 400 includes a touch pad (display screen) 410, a camera 420, a camera 430, a decision button 440, and a microphone 490, and the user looks at the touch pad 410.

These correspond to the touch pad 110, the camera 120, the camera 130, the side button 140, and the microphone 150 of the smartphone 100 described above, a cursor 470 corresponds to the cursor 210, activation of an application program with the displayed icon 220 or input of the number while an application program is being executed are similar to those described above, and a process for words with the displayed text is also similar to that described above.

However, in the activation of the application program with the displayed icon 220, instead of pushing the decision button 440, the microphone 490 may receive "execute" as an operation by voice.

The instructions by such operations can also be used for information search. In the example illustrated in Fig. 4, in photograph information in which three persons, that is, a person 480-1, a person 480-2, and a person 480-3 are subjects, in a case in which the user desires to know person information of the person 480-2, when the user turns the line of sight to the display of the person 480-2, and the cursor 470 is moved to the display of the person 480-2, the user pushes the decision button 440 or say "search for information" to the microphone 490.

On the other hand, when the user's point of view is specified to move the cursor 470, and the decision button 440 is pushed or an operation by voice such as "search for information" is received by the microphone 490, the tablet terminal 400 performs face recognition on an image at a position at which the point of view is specified, that is, a position at which the cursor 470 is being displayed, searches information stored in the tablet terminal 400 or information on the Internet, and output found results by voice synthesis or displays the found results on the touch pad 410.

When the user's point of view is specified to move the cursor 470, an operation in which the decision button 440 is pushed is received, and an operation by voice such as "search for information" is received by the microphone 490, the tablet terminal 400 may perform face recognition.

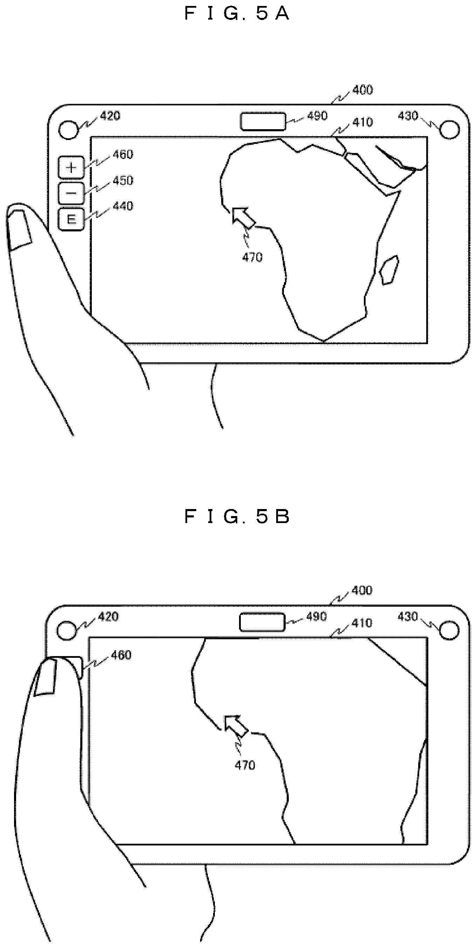

An information search target may be map information. Fig. 5A is a diagram illustrating an example in which map information is displayed on the tablet terminal 400. In the tablet terminal 400 illustrated in Fig. 5A, a down button 450 and an up button 460 are added to the tablet terminal 400 illustrated in Fig. 4. The down button 450 and the up button 460 are used to adjust a sound output volume but are also used to adjust image zooming.

First, the user performs an operation so that an "Africa map" is displayed, and in Fig. 5A, the Africa map is displayed on the touch pad 410. The operation for displaying the "Africa map" may be performed when a voice "Africa map" is input to the microphone 490 or may be performed when the decision button 440 is pushed together or a specific region of the touch pad 410 is touched together with this voice.

Then, if the user aligns the point of view with a part of the Africa map and pushes the up button 460, the tablet terminal 400 specifies the point of view from the image of the user obtained by the camera 420 and the camera 430 in accordance with the operation of the user operation, displays the cursor 470 according to the position of the point of view, and zooms up the map centering on the cursor 470 which is the position of the point of view as illustrated in Fig. 5B if it is detected that the up button 460 is pushed.

Accordingly, a part which the user desires to see in order to confirm a further detailed position is zoomed up, and thus the user can observe a part which the user desires to know in detail.

Further, if it is detected that the down button 450 is pushed instead of the up button 460, the tablet terminal 400 zooms down the map centering on the cursor 470 which is the position of the point of view. Further, when it is detected that the up button 460 or the down button 450 is pushed and an operation by voice such as "zoom up" or "zoom down" is received the microphone 490, the zoom up or zoom down process may be performed on the map.

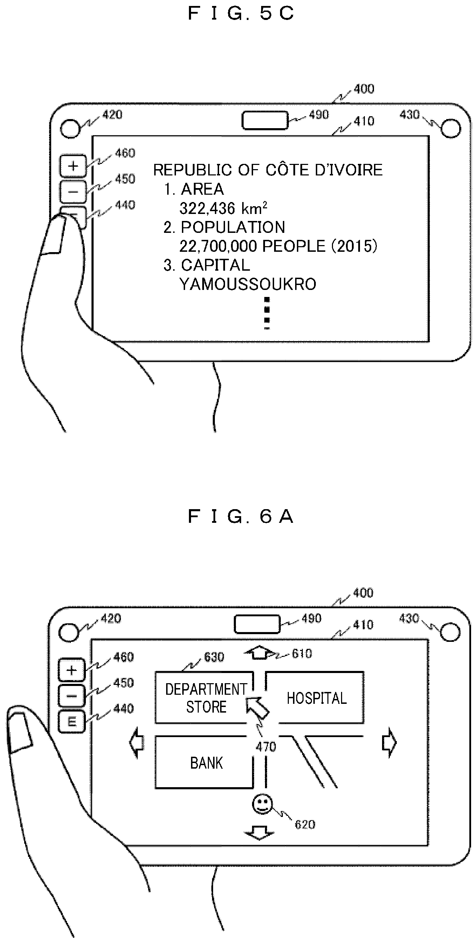

Further, in the display illustrated in Fig. 5B, if it is detected that the decision button 440 is pushed, the tablet terminal 400 specifies a country indicated by the cursor 470 that is the position of the point of view on the map, searches for information related to the specified country from a storage device in the tablet terminal 400 or the Internet, and displays the searched information on the touch pad 410 as illustrated in Fig. 5C.

Here, when it is detected that the decision button 440 is pushed and an operation by voice such as "detailed information" is received by the microphone 490, the tablet terminal 400 may execute the search process and the display process.

In the information search based on the map information, map display and search for surrounding information according to the position of the tablet terminal 400 may be enabled based on a global positioning system (GPS). If a map application program is activated, the tablet terminal 400 displays a map centered on a current position based on the GPS.

Fig. 6A is a diagram illustrating an example in which map information is displayed on the tablet terminal 400. A touch pad 410, a camera 420, a camera 430, a decision button 440, a down button 450, an up button 460, a cursor 470, and a microphone 490 are similar to those described above. A four-direction arrow for scrolling the map and a current position mark 620 are also displayed on the touch pad 410.

If the point of view is aligned with an up arrow 610, and the decision button 440 is pushed in a state in which the current position mark 620 is displayed at the center of the map, the map is scrolled down, and a display screen illustrated in Fig. 6A is obtained. In Fig. 6A, the current position mark 620 is also moved down as the map is scrolled down.

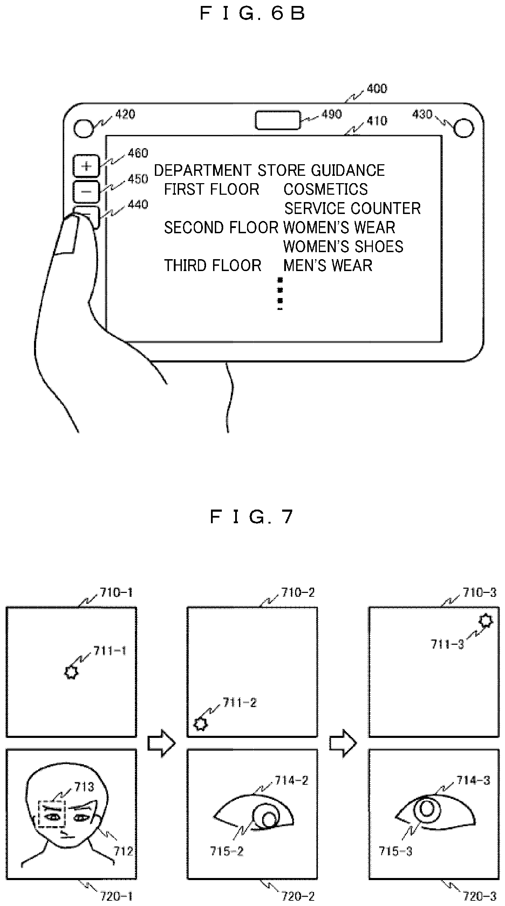

In the display screen illustrated in Fig. 6A, if the point of view of the user is aligned with a department store 630, the cursor 470 is displayed to indicate the department store 630, and if the decision button 440 is pushed, a display screen illustrated in Fig. 6B is displayed. Accordingly, the user can obtain in advance information of each floor of the department store to visit.

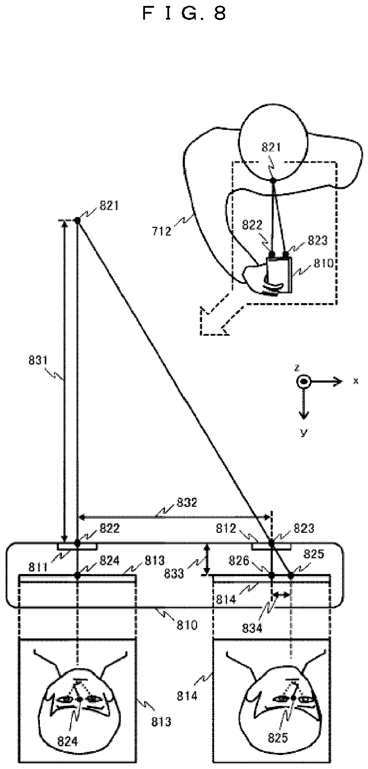

A calibration and distance measurement for specifying the point of view will be described below with reference to Figs. 7 and 8. If the calibration is started, as illustrated in Fig. 7, first, a mark 711-1 flashing at the center as in a display screen 710-1 is displayed in a display screen 710 of the touch pad 110 or the touch pad 410.

A captured image 720-1 by the camera 120, the camera 130, the camera 420, or the camera 430 is acquired for the display screen 710-1. Here, as will be described later with reference to Fig. 8, a distance to a subject 712, that is, the user may be measured using a parallax of the two cameras 120 and 130 or the two cameras 420 and 430. It is desirable for a magnification of the camera in the captured image 720-1 to be a degree at which the upper body of the subject 712 fits.

Then, a mark 711-2 flashing in the lower left corner is displayed as in a display screen 710-2. At this time, a message such as "pay attention to flashing shape" may be output as a synthesized voice. Further, the magnification of the camera is increased, an eye part 713 of the subject 712 is closed up, and a captured image 720-2 is acquired.

Then, a mark 711-3 flashing in the upper right corner is displayed as in a display screen 710-3. A captured image 720-3 in which the eye part 713 of the subject 712 is closed up with the same magnification of the camera from which the captured image 720-2 is acquired, and a correlation of eye patterns of the captured image 720-2 is acquired and the captured image 720-3 is obtained.

That is, as the line of sight is turned to a position far from the center of the display screen 710, a position 715 of a pupil or an iris in a contour 714 of the eye is displaced away from the center of the contour 714 of the eye. A ratio of a displacement amount of a captured image newly obtained to specify the point of view actually after the calibration from end points of the display screen may be calculated as the position of the point of view from a ratio relative to a reference of displacement on the basis of a displacement between a position 715-2 of a pupil or an iris to the contour 714-2 of the eye and a position 715-3 of a pupil or an iris to the contour 714-3 of the eye when the end points of the display screen 710 (the mark 711-2 and the mark 711-3) are viewed.

Also, the angle of the line of sight between the captured image 720-2 and the captured image 720-3 may be calculated from the distance between the mark 711-2 and the mark 711-3 and the distance between the smartphone 100 (or the tablet terminal 400) and the user (the subject 712) measured when the captured image 720-1 is acquired, the ratio of the angle of the line of sight may be calculated from the ratio of the displacement amount of the newly obtained captured image relative to the reference of the displacement, and the position of the point of view may be calculated from the angle of the line of sight and the distance when the newly captured image is acquired.

Further, in the description using Fig. 7, the process for one eye has been described, but the process may be performed for each of both eyes, and then averaging or the like may be performed. Also, the mark 711-2 and the mark 711-3 may be displayed without displaying the mark 711-1. In addition to the display of the mark 711-2 and the mark 711-3 and the acquisition of the captured image 720-2 and the captured image 720-3, a mark may be displayed even on the upper left and lower right of the display screen 710, and the respective captured images may be acquired.

Fig. 8 is a diagram illustrating an example of distance measurement by two cameras. An example in which a point 821 which is a center position of both eyes of the subject 712 is detected by face recognition, and distance measurement is performed using the detected point 821 will be described. Further, to simplify the description, the distance measurement in a state in which the user who is the subject 712 is facing the front of one of the two cameras.

In Fig. 8, a positional relation in which a portable terminal 810 images the subject 712 is illustrated in an xy plane as seen from above a z axis. The portable terminal 810 is the smartphone 100 or the tablet terminal 400 and includes a lens 811, a lens 812, an imaging element 813, and an imaging element 814.

In the imaging element 813, the subject 712 including the point 821 is imaged through the lens 811. Here, the point 821 is a point 824 on the imaging element 813. The subject 712 including the point 821 is also imaged on the imaging element 814 through the lens 812. Here, the point 821 is a point 825 on the imaging element 814.

Then, a difference in position between a point 826 in the imaging element 814 which corresponds to the point 824 in the imaging element 813 and the point 825 corresponds to a parallax 834. As described above, if one subject 712 is imaged with two cameras, there is a difference in image between the imaging element 813 and the imaging element 814 of the respective cameras.

Further, a large triangle formed by the point 821, a point 822, and a point 823 and a small triangle formed by the point 823, the point 826, and the point 825 have a similarity relation due to optical properties. Therefore, when a length 831 from the portable terminal 810 to the subject 712 is indicated by a distance L, a length 832 between lenses is indicated by a distance D, a focal distance 833 is indicated by a distance F, and the parallax 834 is indicated by a distance S, these distances have a relation of L : D = F : S.

If the distance L is indicated by L = D × F/S, and, for example, D = 5 cm, F = 3 mm, and S = 0.5 mm are set, L = 30 cm is obtained from this relation. In the smartphone 100 or the tablet terminal 400 which is the portable terminal 810, the relation between the position of the lens of each of the two cameras and the position of the imaging element is fixed, and thus the distance between the subject 712 and the portable terminal 810 can be calculated as described above.

As described above, the point of view and the distance can be calculated if the eye of the user who is the subject can be imaged, but since there may be a big difference in how to open the eyes or how to calculate the difference between the user and the portable terminal depending on an individual difference of the user, there are cases in which it is difficult to calculate the point of view and the distance with the contour and the pupil of the eye. In this regard, an example using a glasses-type device will be described below.

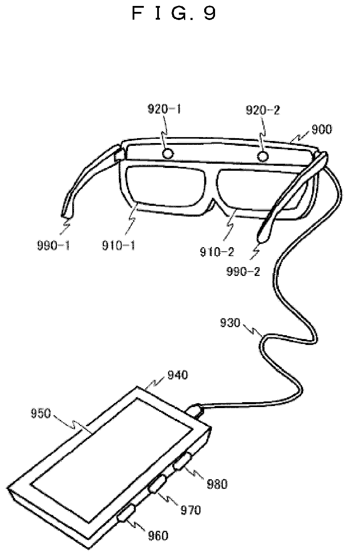

Fig. 9 is a diagram illustrating examples of a glasses-type device 900 and a portable terminal 940. The glasses-type device 900 has a shape of glasses and is fixed to the face of the user's through contact with the nose and the ears and includes a camera 920-1 and a camera 920-2. The camera 920 is located near the eye of the user, and thus it is easy to image the contour and the pupil of the eye. Further, a single camera 920 may be disposed.

The distance between the camera 920 and the eye of the user is almost constant depending on the shape of the glasses-type device 900 although there are individual differences in the shape of the face of the user, and may be set as a fixed value when the shape of the glasses-type device 900 is designed.

The portable terminal 940 is the smartphone 100 or the tablet terminal 400 and is connected to the glasses-type device 900 with a connection code 930, and the captured image data of the camera 920 is obtained from the glasses-type device 900. Although Fig. 9 illustrates an example of a wired connection using the connection code 930, the portable terminal 940 and the glasses-type device 900 may be wirelessly connected without the connection code 930.

The portable terminal 940 includes a touch pad (display screen) 950, an up button 960, a down button 970, and a decision button 980, and operations thereof are similar to those described above, and two cameras may not be disposed. A transparent or colored lens is inserted into a rim 910 of the glasses-type device 900 so that the user can see the touch pad 950.

A liquid crystal screen may be inserted into one or both of the rim 910-1 and the rim 910-2 of the glasses-type device 900. The portable terminal 940 may output image data to the glasses-type device 900 via the connection code 930 in order to display an icon or the like on the LCD screen.

In a case in which the liquid crystal screen is inserted into the glasses-type device 900, the portable terminal 940 calculates the point of view of the user to the icon or the like displayed on the liquid crystal screen. Further, the portable terminal 940 in this case may not include the touch pad 950 or may include a touch pad that is smaller in size or lower in resolution than the touch pad 950.

Either or both of temples 990-1 and 990-2 of the glasses-type device 900 may include an earphone. The portable terminal 940 may output synthesized voice data to the glasses-type device 900 via the connection code 930 in order to convey information to the user by sound using an earphone. The glasses-type device 900 may include a headphone instead of the earphone. In order to provide the headphone, a headband that touches the head of the user may be provided.

Also, the temple 990 may include a microphone like a hands-free phone. To obtain voice data from the microphone, the portable terminal 940 may input voice data from the glasses-type device 900 via the connection code 930.

Further, the glasses-type device 900 may include a liquid crystal screen and may include the up button 960, the down button 970, and the decision button 980, and the glasses-type device 900 executes the process of the portable terminal 940. In this case, the glasses-type device 900 can operate independently, and thus the connection code 930 is not necessary.

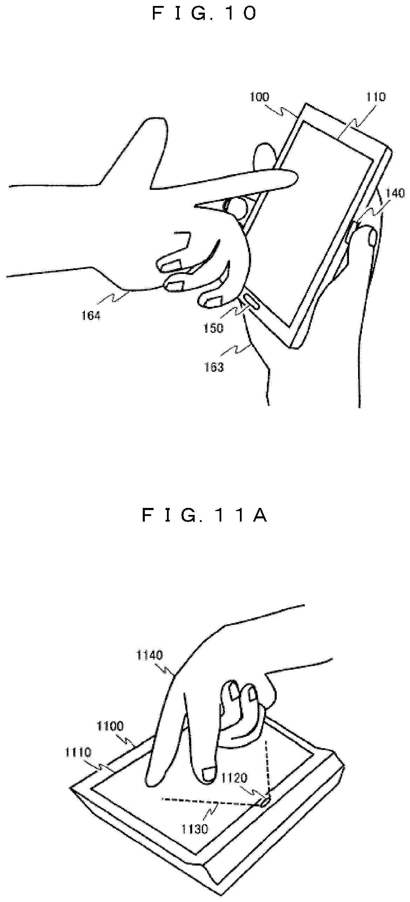

In the above description, the camera is used to specify the point of view of the user, but the camera need not be necessarily used. For example, in a case in which the smartphone is grabbed by the user's hand, the user's finger may unintentionally touch the touch pad and an input not intended by the user is performed, whereas the operation illustrated in Fig. 10 may be detected without using the camera.

Fig. 10 is a diagram illustrating an example of an operation in which a camera is not used. The smartphone 100 includes a touch pad 110, a side button 140, and a microphone 150. A camera may be disposed but not used. The smartphone 100 executes a process corresponding to the detected operation by detecting the touch position on the touch pad 110 by one hand 164 instead of the position of the point of view and detecting the pushing of the side button 140 by one hand 163.

Further, the smartphone 100 may detect the touch position on the touch pad 110 with one hand 164, and detect the operation with the voice on the microphone 150 instead of detecting the side button 140 being pushed. Accordingly, detection of other operations can be performed in addition to the detection of the operation on the touch pad 110, so that the possibility of erroneous detection of an operation not intended by the user can be reduced.

In the above description, operations other than the operation on the touch pad are detected, but an example of reducing the possibility of erroneous detection of an operation not intended by the user in the detection of the operation on the touch pad will be described. Fig. 11A is a diagram illustrating an example of a tablet terminal 1100 that detects touches of a plurality of fingers. The tablet terminal 1100 includes a touch pad (display screen) 1110 and a camera 1120.

The camera 1120 is installed to be tilted toward the touch pad 1110 so that a hand 1140 that operates the touch pad 1110 can be imaged together with the fingers, and an imaging optical axis of the camera 1120 is tilted in a direction of the touch pad 1110, and an imaging range includes the periphery of the touch pad 1110 like an angle of field 1130.

The tablet terminal 1100 detects a touch of a first finger (for example, the index finger) of the hand 1140, and moves the cursor if the movement of the touched finger is detected in that state. Then, if a touch by a second finger (for example, the thumb) of the hand 1140 within a range of an execution (decision) button in the touch pad 1110 is detected, the operation corresponding to the position of the cursor that is the position at which the first finger is detected is executed or decided.

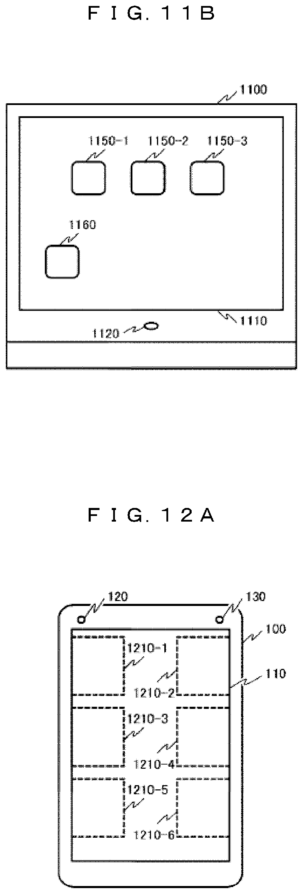

Fig. 11B is a diagram illustrating an example of a screen of the tablet terminal 1100. An icon 1150-1, an icon 1150-2, and an icon 1150-3 are displayed on the touch pad 1110, and each icon 1150 corresponds to an application program or an instruction for an application program.

An icon 1160 is an execution (decision) button. For example, if the touch to the icon 1160 by the second finger is detected in a state in which the touch to the icon 1150-1 by the first finger is detected, the tablet terminal 1100 activates the application program corresponding to the icon 1150-1 or performs an operation based on an instruction.

The icon 1160 may not be displayed on the touch pad 1110. In this case, the range of the execution (decision) button is a region other than the icon 1150. Also, if it is detected that the first finger is continuously touching any one icon 1150 in a state in which the icon 1160 is not displayed for a preset time or more, the icon 1160 may be displayed, and the touch to the icon 1160 by the second finger may be detected.

The finger type touching the touch pad 1110 is recognized by analyzing the image captured by the camera 1120. In a case in which the touch of the second finger is recognized as the touch of the thumb by the finger type recognition, it may be detected as the so-called left click of the mouse, and an application program corresponding to the icon 1150 may be activated.

Further, in a case in which the touch of the second finger is recognized as the touch of the middle finger, it may be detected as the so-called right click of the mouse, and a menu of an application program corresponding to the icon 1150 may be displayed or information of the application program may be displayed. Further, in a case in which the touch of the first finger is performed with the middle finger, the touch of the second finger may be detected as the left click of the mouse when the touch of the second finger is performed with the index finger and may be detected as the right click of the mouse when the touch of the second is performed with the ring finger.

To make the user aware of the finger type recognition result, the area around the touch part of the touch pad 1110 may be displayed in a specific color corresponding to the recognized finger type. Then, the display of the color around the touch part may be regarded as a cursor. Accordingly, it is possible to reduce the possibility of an erroneous instruction caused by erroneous finger type recognition.

Further, the image of the hand 1140 captured by the camera 1120 may be displayed on the touch pad 1110 to be superimposed on the icon 1150 and the icon 1160.

Then, an example in which the point of view is detected by the camera, but the touch pad is used instead of the side button 140 illustrated in Fig. 1 and the decision button 440 illustrated in Fig. 4 will be described. Fig. 12A is a diagram illustrating an example of a smartphone 100 in which a part of the touch pad 110 is a special region.

The smartphone 100 includes a touch pad 110, a camera 120, and a camera 130. The camera 120 and the camera 130 are similar to those described above. The smartphone 100 may include a side button and a microphone, but they are not used here. The smartphone 100 may be the tablet terminal 400.

In order to use the touch pad 110 instead of the side button 140 and the decision button 440, a special region 1210 that replaces the side button 140 and the decision button 440 is set in the touch pad 110. The special region 1210 is, for example, a region that is touched with the thumb when the smartphone 100 is held with one hand.

In a case in which the user grips the smartphone 100 with one hand, the gripping position differs depending on the user's habit, and the gripping position differs depending on whether the user is right-handed or left-handed. In this regard, a setting that one special region 1210 of special regions 1210-1 to 1210-6 illustrated in Fig. 12A is selected is received after the smartphone 100 is powered on or reset.

In Fig. 12A, for example, the special regions 1210-1, 1210-3, and 1210-5 are for cases in which it is held with the left hand, and the special regions 1210-2, 1210-4, and 1210-6 are for cases in which it is held with the right hand. It is desirable that the special region 1210 touched with the hand holding the smartphone 100 be a region that touches the edge of the touch pad 110.

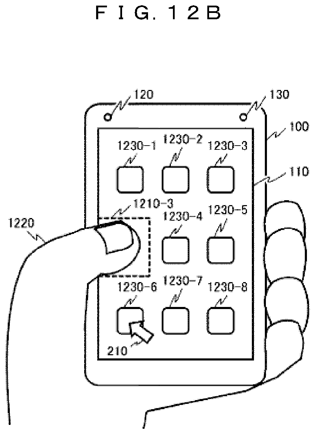

Fig. 12B is an example in which a setting that the special region 1210-3 is selected is received. A position designation by the point of view is valid for the touch pad 110 excluding the special region 1210-3, and the special region 1210-3 is set to be dedicated for touch. For this reason, the icon 1230 is not placed in the special region 1210-3.

Then, as described above, the point of view of the user is specified based on the captured images of the camera 120 and the camera 130, and the cursor 210 is displayed. The position of the cursor 210 which is the position of the point of view can be moved from the icon 1230-1 to the icon 1230-8.

If it is detected that the special region 1210-3 is touched by the thumb of one hand 1220 at a position at which the cursor 210 is positioned over the icon 1230-6, an application corresponding to the icon 1230-6 is activated, or an instruction is sent to the application.

Further, a character string representing "decision", "touch" or the like, or a special icon may be displayed in the special region 1210-3 so that the user can understand that it is the special region.

As a plurality of operations such as a first operation by the point of view or the first finger described above and a second operation by a button or voice are detected, the validity of the operation is confirmed, and an operation according to the user's intention is realized. The operation for confirming the validity is not limited to the operation described above.

For example, if the icon selection state by the point of view continues for a few seconds as the detection of the operation using the camera, a message such as "Please close only the right eye for three seconds if you like" may be presented to the user at the time of execution or decision, and if such an action is detected, it may transition to an operation of execution or decision.

Also, if the user is wearing the sunglasses and an input other than the eye is necessary, for example, in order to confirm it with a lip shape, a message such as "Please make a mouth shape when you pronounce 'O' if you like" may be presented to the user, and it may be determined whether such an action is detected.

The sensor of the smartphone 100 or the tablet terminal 400 for detecting the operation is similar to that described above, but the detected operation may be given a priority as an input condition. For example, a priority may be set to the following information in advance, and an arbitrary combination may be made:
(1) the line of sight, the point of view, or the eye condition;
(2) the lip shape;
(3) the voice;
(4) the switch input; and
(5) the touch information to the touch pad.

An input condition management unit to be described later selects an input condition with a high priority or an input condition with a low priority according to a surrounding environment. For example, if it is determined that the surrounding environment is a dark environment, the input condition in which the camera is used is not selected, and the switch input and the touch information to the touch pad with a low priority may be selected.

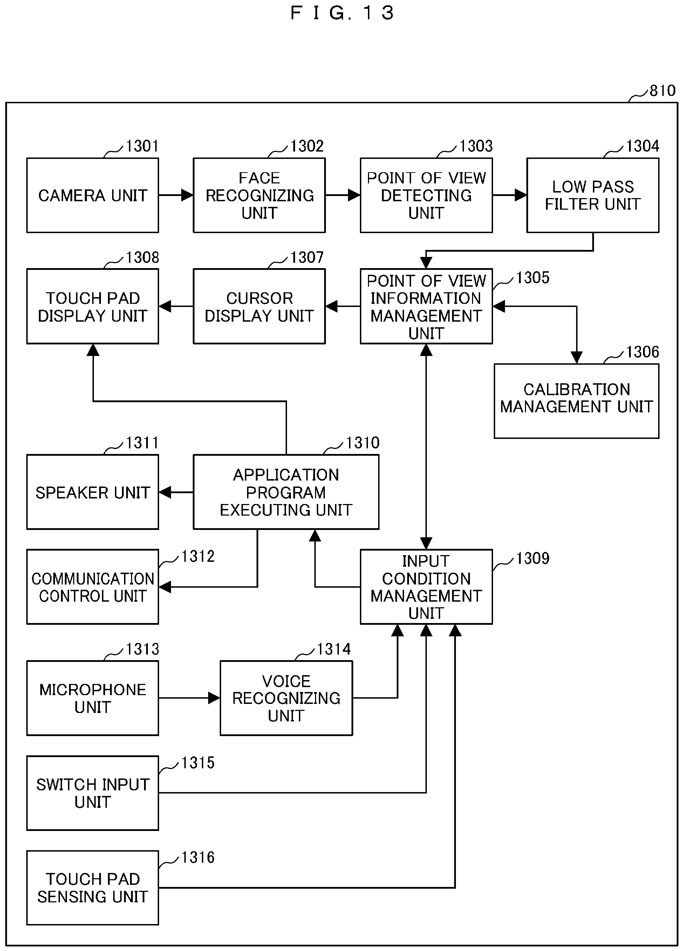

Fig. 13 is a diagram illustrating an example of a first hardware configuration of the portable terminal 810. The portable terminal 810 is the smartphone 100 or the tablet terminal 400 as described above. A camera unit 1301 corresponds to the cameras 120 and 130, the cameras 420 and 430, or the like, a touch pad display unit 1308 and a touch pad sensing unit 1316 correspond to the touch pad 110, the touch pad 410, or the like.

A microphone unit 1313 corresponds to the microphone 150 or the microphone 490, and a switch input unit 1315 corresponds to the side button 140, the decision button 440, or the like. Further, hardware such as the original phone function of the smartphone 100 is omitted because it does not relate to the description of the present embodiment. Further, the activation of the application program will be described in particular.

The camera unit 1301 outputs image information obtained by imaging of two or more cameras to a face recognizing unit 1302. Further, the face recognizing unit 1302 recognizes the face and extracts features of the face parts. The face recognizing unit 1302 may calculate a distance up to the face and perform an operation of outputting a message to the user in a case in which the face is unable to be recognized in the front or the eye is unable to be recognized.

A point of view detecting unit 1303 receives information of the eye part and the distance to the face from the face recognizing unit 1302, and calculates the position of the point of view. Here, it may be determined whether or not the point of view is turned to the touch pad display unit 1308. Then, since the point of view has a property of generating fine movement continuously, a low pass filter unit 1304 cuts fibrillation information and outputs the information of the point of view to a point of view information management unit 1305.

The point of view information management unit 1305 outputs information indicating a location at which there is a point of view on the screen of the touch pad display unit 1308 to a cursor display 1307 and displays the cursor for the user via the touch pad display unit 1308. Further, as described above, icon highlight display or the like may be used instead of the cursor.

On the other hand, as at least one or more input combined with the point of view information, there is a voice input which is input from the microphone unit 1313 and decoded via a voice recognizing unit 1314, a switch input from the switch input unit 1315 such as the side button, or a touch input of the finger which is input from the touch pad sensing unit 1316 or the like.

By aligning these inputs with the point of view input from the point of view information management unit 1305, an input condition management unit 1309 causes an application program executing unit 1310 to activate the application program specified by the input. As described above, when the input condition management unit 1309 determines that a plurality of inputs satisfy a predetermined condition, the input condition management unit 1309 outputs an instruction to the application program executing unit 1310.

The input condition management unit 1309 may have correspondence information between the display position of the icon and the identification information of the application program corresponding to the icon and output the identification information corresponding to the point of view input from the point of view information management unit 1305 to the application program executing unit 1310.

Alternatively, the application program executing unit 1310 may have the correspondence information of the display position of the icon and the identification information of the application program corresponding to the icon, and the input condition management unit 1309 may transfer the input of the point of view from the point of view information management unit 1305 to the application program executing unit 1310 if it is determined that a predetermined condition is satisfied.

The input condition management unit 1309 may have correspondence information of a region of the touch pad 110 or the touch pad 410 or the like and an instruction to be given to the application program and output an instruction according to the input of the touch position from the touch pad sensing unit 1316 to the application program executing unit 1310.

The input condition management unit 1309 may have a plurality of pieces of information of the special region 1210 as the region of the touch pad 110 or the touch pad 410 or the like, have information of the selected special region 1210-3, and have a region of the decision button of the icon 1160.

In the above description, the input condition management unit 1309 is described as an independent control unit, but it may be a part of the application program executing unit 1310. Finally, through the application program executing unit 1310, a speaker unit 1311 may transmit information to the user by voice, or a command may be sent to a communication control unit 1312 for communication.

Further, as described above with reference to Fig. 7, since there are individual differences between the information of the eye imaged by the camera and the point of view, a calibration management unit 1306 manages a relation of the information of the eye imaged by the camera and the point of view and output it to the point of view information management unit 1305, and the point of view information management unit 1305 specifies the point of view based on the relation.

Through the units from the camera unit 1301 to the point of view information management unit 1305, the finger may be recognized instead of the face, and the position and the type of the finger may be specified. The input condition management unit 1309 may use the information of the position and the type of the finger from the point of view information management unit 1305 as an input and may forward the input from the touch pad sensing unit 1316 to the point of view information management unit 1305 and cause the point of view information management unit 1305 to display the cursor at the touch position.

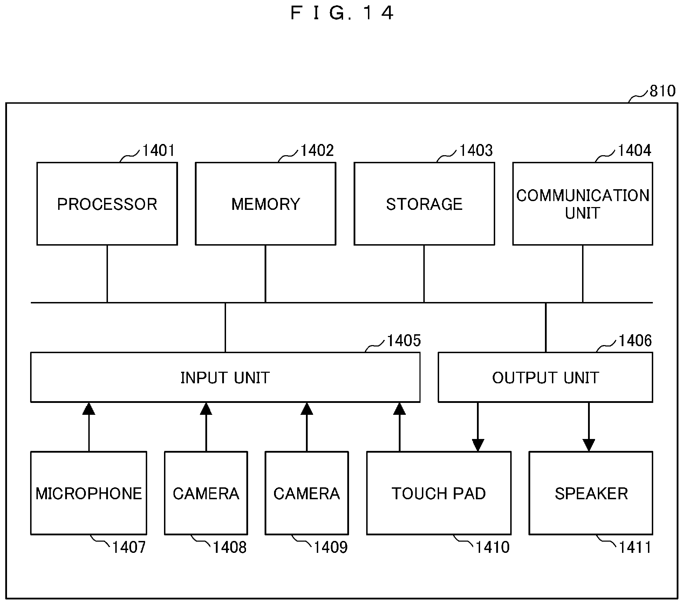

Fig. 14 is a diagram illustrating an example of a second hardware configuration of the portable terminal 810. Each unit of the hardware described with reference to Fig. 13 may be realized by software. The example of the hardware configuration illustrated in Fig. 14 is an example of a hardware configuration for realization in the software. Further, the hardware configuration of the portable terminal 810 illustrated in Fig. 14 may be a hardware configuration of a general smartphone or tablet terminal.

A processor 1401 executes a program stored in a memory 1402, exchanges data with each unit illustrated in Fig. 14, and processes the data. The memory 1402 is, for example, a random-access memory (RAM) and stores a program and data.

A storage 1403 is, for example, a flash memory, and stores a program and data. A program and data may be transferred between the memory 1402 and the storage 1403. A communication unit 1404 performs communication via a wired connection using the connection code 930, or a wireless telephone line or wireless local area network (LAN).

The communication unit 1404 performs transmission and reception under the control of the processor 1401 that executes the application program stored in the memory 1402. Also, the program and the data stored in the memory 1402 or the storage 1403 may be received by the communication unit 1404.

An input unit 1405 stores an input signal from a microphone 1407 or the like in the memory 1402 or the storage 1403 as data. The microphone 1407 is the microphone 150 illustrated in Fig. 1 or the microphone 490 illustrated in Fig. 4 and inputs a voice signal. A camera 1408 and a camera 1409 are the camera 120 and the camera 130 illustrated in Fig. 1 or the camera 420 and the camera 430 illustrated in Fig. 4, respectively, and input the imaged video signal.

An output unit 1406 converts the data stored in the memory 1402 or the storage 1403 into a signal and outputs it to a speaker 1411 or the like. A touch pad 1410 is the touch pad 110 illustrated in Fig. 1 or the touch pad 410 illustrated in Fig. 4 or the like, and if a touch is detected, the touch pad 1410 outputs the touch information to the input unit 1405, and displays a screen according to the video signal input from the output unit.

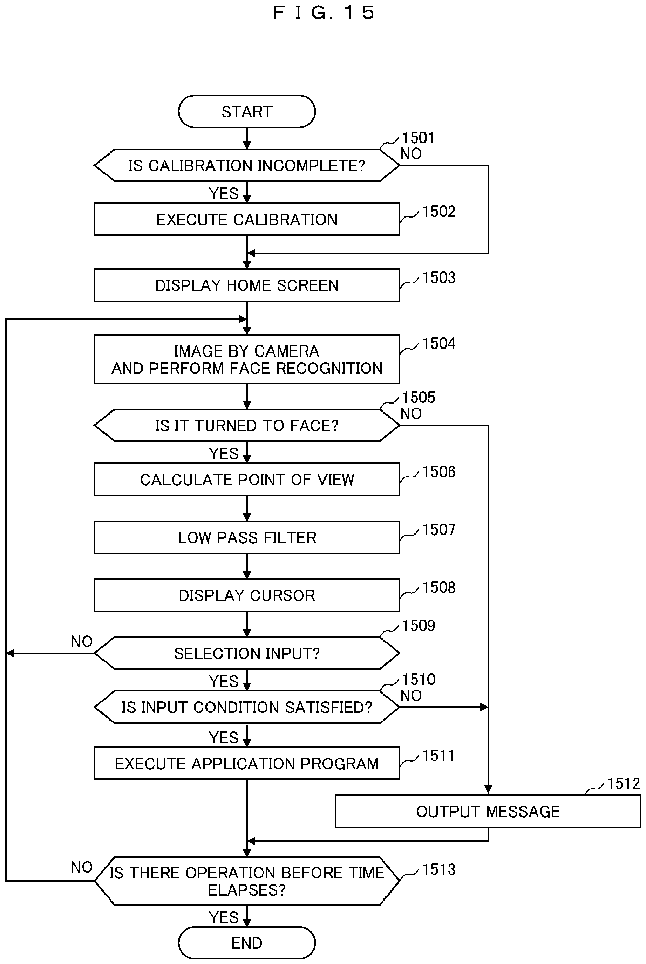

Fig. 15 is a diagram illustrating an example of a process of the portable terminal 810 illustrated in Fig. 14 and is an example of a flowchart of a program which is stored in the memory 1402 and executed by the processor 1401. If the portable terminal 810 is powered on or released from sleep, the processor 1401 starts the process.

First, the processor 1401 determines whether or not the calibration is incomplete (step 1501). For this determination, for example, a flag indicating whether or not the calibration is incomplete may be stored in the storage 1403, and the processor 1401 may read and determine the flag. When the portable terminal 810 is manufactured and reset, the flag is set to incomplete.

In a case in which it is determined that it is incomplete in step 1501, the processor 1401 executes the calibration (step 1502), and if it is determined that it is not incomplete, step 1502 is skipped. Processing content of the calibration in step 1502 is similar to that described above with reference to Figs. 7 and 8, and the cameras 1408 and 1409 of the portable terminal 810 are enabled to image the user. Further, the flag is set to complete.

The processor 1401 displays the home screen called the standby screen or the like (step 1503). As illustrated in Fig. 2, the home screen includes icons respectively corresponding to a plurality of application programs, and the application program is activated by operating the icon. At this point, if the camera unit 1301 or the cameras 1408 and 1409 of the portable terminal 810 are not enabled, the camera unit or the cameras are enabled.

The processor 1401 controls the cameras 1408 and 1409 such that the face is imaged and recognized (step 1504). In the face recognition, the process for recognizing the face facing the cameras 1408 and 1409 is executed, and when the face is recognized, the position of the pupil or the iris in the contour of the eye is recognized.

when the face can be recognized in the front as a result of executing the process for recognizing the face in step 1504, the face is regarded as facing the portable terminal 810, and the processor 1401 proceeds to step 1506, and when the face is unable to be recognized or when the face can be recognized as facing sideways, the face is regarded as not facing the portable terminal 810, and the processor 1401 proceeds to step 1512.

In step 1512, the processor 1401 outputs a message for urging the user's attention or a message for causing the user to turn the face. This message may be output from the speaker 1411.

In step 1506, the processor 1401 calculates the point of view from the relation between the position of the pupil or the iris in the contour of the eye recognized in step 1504 and the position of the pupil or the iris in the contour of the eye recorded in the calibration of step 1502. The distance to the face may be calculated from the parallax of the camera 1408 and the camera 1409 and used to calculate the point of view.

The processor 1401 applies the low pass filter to prevent the erroneous detection caused by a small fluctuation in the calculated point of view (step 1507). For example, the point of view may be calculated from images captured at a preset time interval, and if a preset number of points of views are calculated, the positions of the points of views may be averaged.

The processor 1401 displays the cursor at the position corresponding to the point of view to which the low pass filter is applied (step 1508). In a case in which the position corresponding to the point of view coincides with the position of the icon on the home screen displayed in step 1503, the icon at the coinciding position may be highlighted.

The processor 1401 determines whether or not there is an input for selecting the icon designated by the point of view (step 1509). This selection input is, for example, an input by the side button 140 in Fig. 1. If it is determined that there is no input, the processor 1401 returns to step 1504 because the user is likely to just see the icon designated by the point of view.

If it is determined that there is a selection input, the processor 1401 determines whether or not the selection input satisfies an input condition (step 1510). This input condition is similar to that described above as the input condition with a priority and is set in advance. For example, if it is determined that the input condition is not satisfied although there is an input by the side button 140, the processor 1401 proceeds to step 1512.

In step 1512, the processor 1401 outputs a message indicating that the input condition is not satisfied or a message indicating that the input is not valid. This message may be output from the speaker 1411. Further, in step 1512, it may be determined whether it is executed with the determination result of step 1505 or with the determination result of step 1510.

If it is determined in step 1510 that the input condition is satisfied, the processor 1401 executes the application program corresponding to the icon designated by the point of view (step 1511). A message serving as the execution result of the application program may be output from the speaker 1411, or an error message by execution may be output from the speaker 1411.

After the application program is executed in step 1511 or after the message is output in step 1512, the processor 1401 determines whether there is an operation before a preset time elapses. If it is determined that the preset time elapses, the processor 1401 causes the portable terminal 810 to transition to, for example, the sleep state and ends the process of the flowchart.

If it is determined that there is an operation before the preset time elapses, the processor 1401 returns to step 1504. Further, the determination of whether there is an operation in step 1513 is not limited to an independent determination and may be combined with step 1506 or step 1509.

Further, in the above description using Fig. 15, the example of using the point of view has been described, but other input conditions may be used as described above, and the operation of each unit described with reference to Fig.13 may be realized by a program.

As described above, the portable terminal operates by determining a plurality of input conditions for the input by the operation of the user, and thus the possibility of erroneous operation caused by the erroneous operation of the user can be reduced.

### INDUSTRIAL APPLICABILITY

The present invention can be applied to portable terminals such as smartphones and tablet terminals and can also be applied to computers operated by the users.

### REFERENCE SIGNS LIST

- 100: Smartphone
- 110: Touch pad
- 120: Camera
- 130: Camera
- 140: Side button
- 150: Microphone

## Claims

1. A method of operating a portable terminal (100), the portable terminal (100) comprising:
a touch pad (110) that is configured to display one or more icons (1230) in a first region and to detect a touch in a second region, wherein a part of the touch pad (110) is preset as the second region (1210) dedicated for touch and the one or more icons (1230) are not displayed in the second region (1210) of the touch pad (110);
the method comprising:
imaging, by a camera (120, 130) of the portable terminal (100), a face of a user of the portable terminal (100);
detecting, by a detecting unit of the portable terminal (100), a point of view on the touch pad (110) to which an eye of the face of the user imaged by the camera (120, 130) is turned, wherein the point of view is not detected in the preset second region (1210) of the touch pad (110);
outputting, by an information management unit of the portable terminal (100), a position of the point of view detected by the detecting unit;
performing, by a cursor display unit of the portable terminal (100), control such that a cursor is displayed on the touch pad (110) according to the position of the point of view on the touch pad (110) output from the information management unit;
determining, by an input condition management unit of the portable terminal (100), whether or not a preset input condition is satisfied for an input by a touch to the preset second region (1210) of the touch pad (110) and an input of the position of the point of view on the touch pad (110) output from the information management unit; and
activating, by an application program executing unit of the portable terminal (100), an application program corresponding to an icon of the one or more icons (1230) of the position of the point of view on the touch pad (110) from the information management unit according to the determination of the input condition management unit for the inputting to the second region (1210) and the inputting of the position of the point of view on the first region.

2. The method of operating a portable terminal (100) according to claim 1, wherein the method further comprises selecting the preset second region (1210) of the touch pad (110) from a plurality of regions that come in contact with an edge of the touch pad (110) and setting the preset second region (1210).

## Patentansprüche

1. Verfahren zum Betreiben eines tragbaren Endgeräts (100), wobei das tragbare Endgerät (100) Folgendes umfasst:
ein Tastfeld (110), das ausgelegt ist, um ein oder mehrere Symbole (1230) in einem ersten Bereich anzuzeigen und eine Berührung in einem zweiten Bereich zu detektieren, wobei ein Teil des Tastfelds (110) als der zweite Bereich (1210) voreingestellt ist, der für Berührungen zugewiesen ist, und das eine oder die mehreren Symbole (1230) nicht im zweiten Bereich (1210) des Tastfelds (110) angezeigt werden;
wobei das Verfahren Folgendes umfasst:
Abbilden, mittels einer Kamera (120, 130) des tragbaren Endgeräts (100), des Gesichts eines Benutzers des tragbaren Endgeräts (100);
Detektieren, mittels einer Detektiereinheit des tragbaren Endgeräts (100), eines Blickpunkts auf dem Tastfeld (110), dem ein Auge des Gesichts des Benutzers, das durch die Kamera (120, 130) abgebildet wird, zugewandt ist, wobei der Blickpunkt im voreingestellten zweiten Bereich (1210) des Tastfelds (110) nicht detektiert wird;
Ausgeben, mittels einer Informationsverwaltungseinheit des tragbaren Endgeräts (100), einer Position des Blickpunkts, der durch die Erfassungseinheit erfasst wird;
Ausführen, mittels einer Positionsanzeiger-Anzeigeeinheit des tragbaren Endgeräts (100), einer Steuerung derart, dass ein Positionsanzeiger auf dem Tastfeld (110) gemäß der Position des Blickpunkts auf dem Tastfeld (110), die von der Informationsverwaltungseinheit ausgegeben wird, angezeigt wird;
Bestimmen, mittels einer Eingabebedingungsverwaltungseinheit des tragbaren Endgeräts (100), ob eine voreingestellte Eingabebedingung für eine Eingabe durch eine Berührung im voreingestellten zweiten Bereich (1210) des Tastfelds (110) und für eine Eingabe der Position des Blickpunkts auf dem Tastfeld (110), die von der Informationsverwaltungseinheit ausgegeben wird, erfüllt ist oder nicht; und
Aktivieren, mittels einer Anwendungsprogrammausführungseinheit des tragbaren Endgeräts (100), eines Anwendungsprogramms, das einem Symbol aus dem einen oder den mehreren Symbolen (1230) an der Position des Blickpunkts auf dem Tastfeld (110) von der Informationsverwaltungseinheit gemäß der Bestimmung der Eingabebedingungsverwaltungseinheit für die Eingabe im zweiten Bereich (1210) und die Eingabe der Position des Blickpunkts im ersten Bereich entspricht.

2. Verfahren zum Betreiben eines tragbaren Endgeräts (100) nach Anspruch 1, wobei das Verfahren weiters das Auswählen des voreingestellten zweiten Bereichs (1210) des Tastfelds (110) aus einer Vielzahl von Bereichen umfasst, die in Kontakt mit einem Rand des Tastfelds (110) kommen, und das Einstellen des voreingestellten zweiten Bereichs (1210) umfasst.

## Revendications

1. Procédé pour faire fonctionner un terminal portable (100), le terminal portable (100) comprenant :
un pavé tactile (110) qui est configuré pour afficher une ou plusieurs icônes (1230) dans une première région et pour détecter un toucher dans une seconde région, dans lequel une partie du pavé tactile (110) est préréglée en tant que seconde région (1210) dédiée au toucher et les une ou plusieurs icônes (1230) ne sont pas affichées dans la seconde région (1210) du pavé tactile (110) ;
le procédé comprenant les étapes consistant à :
imager, via une caméra (120, 130) du terminal portable (100), un visage d'un utilisateur du terminal portable (100) ;
détecter, via une unité de détection du terminal portable (100), un point de vue sur le pavé tactile (110) vers lequel un œil du visage de l'utilisateur imagé par la caméra (120, 130) est dirigé, dans lequel le point de vue n'est pas détecté dans la seconde région prédéfinie (1210) du pavé tactile (110) ;
délivrer en sortie, via une unité de gestion d'informations du terminal portable (100), une position du point de vue détecté par l'unité de détection ;
effectuer, via une unité d'affichage de curseur du terminal portable (100), une commande de telle sorte qu'un curseur est affiché sur le pavé tactile (110) en fonction de la position du point de vue sur le pavé tactile (110) délivrée en sortie par l'unité de gestion d'informations ;
déterminer, via une unité de gestion de condition d'entrée du terminal portable (100) si oui ou non une condition d'entrée prédéfinie est satisfaite pour une entrée par un toucher vers la seconde région prédéfinie (1210) du pavé tactile (110) et une entrée de la position du point de vue sur la sortie de pavé tactile (110) délivrée en sortie par l'unité de gestion d'informations ; et
activer, via une unité d'exécution de programme d'application du terminal portable (100), un programme d'application correspondant à une icône des une ou plusieurs icônes (1230) de la position du point de vue sur le pavé tactile (110) à partir de l'unité de gestion d'informations selon la détermination de l'unité de gestion de condition d'entrée pour l'entrée vers la seconde région (1210) et l'entrée de la position du point de vue sur la première région.

2. Procédé de fonctionnement d'un terminal portable (100) selon la revendication 1, dans lequel le procédé comprend en outre une sélection de la seconde région prédéfinie (1210) du pavé tactile (110) parmi une pluralité de régions qui viennent en contact avec un bord du pavé tactile (110), et un réglage de la seconde région prédéfinie (1210).
